# DEMANDE DE BREVET EUROPEEN

(11) **EP 1 494 148 A1**
(43) Date de publication de la demande: **05.01.2005**
(21) Numéro de dépôt: 04291644.5
(22) Date de dépôt: 30.06.2004
(51) Int. Cl.: G06F 17/30

(54) **Système et procèdè pour sauvegarder des donnèes dans un agenda èlectronique via internet**

(30) Priorité: 01.07.2003 FR 0307940
(71) Demandeur: Rambaud, Alexandre, 94100 Saint Maur (FR)
(72) Inventeur: Rambaud, Alexandre, 94100 Saint Maur (FR)
(74) Mandataire: Pontet, Bernard

(57) **Abrégé**

L'invention concerne un système pour sauvegarder des données dans un agenda électronique (9) via Internet. Ce système comprend :
- un serveur Web (4) contenant au moins une page Web (5) sur laquelle se trouve au moins une balise,
- une base de données (3) contenant des informations structurées et associées à ladite balise,
- un terminal (7) utilisateur comprenant l'agenda électronique et un navigateur Web (8) pour visualiser les pages Web dudit serveur Web.

Selon l'invention, le serveur Web comprend en outre des moyens de sauvegarde pour sauvegarder directement et de façon automatique depuis la base de données lesdites informations structurées dans l'agenda électronique en réponse à une activation de la balise, et pour permettre la sauvegarde, le terminal utilisateur comprend des moyens d'interfaçage pour activer l'agenda électronique et formater si nécessaire ces informations structurées dans un format compatible avec cet agenda électronique.

## Description

La présente invention se rapporte à un système et un procédé pour sauvegarder des données dans un agenda électronique via Internet.

Si Internet facilite incontestablement la communication des données, il ne réduit pas le "fossé digital" entre d'un coté les données de type professionnel et de l'autre celles affairant à la vie privée et l'individu en tant que tel.

On constate en effet que l'information est généralement recherchée ou utilisée dans un but directement ou indirectement professionnel.

Il serait avantageux de la rendre plus personnelle, soit simplement par le fait de la trouver ou plus généralement par l'intelligence apportée à cette information. Ce mouvement de public vers privé est un moyen de rendre intime l'information publique.

On sait aujourd'hui qu'un agenda électronique par exemple est un outil strictement personnel qui séduit de jour en jour de nombreux adeptes. On estime que d'ici une vingtaine d'années, la terre entière sera conquise par un tel outil. L'agenda électronique semble idéal pour rendre intime des données publiques.

Actuellement, lorsqu'on navigue sur Internet et que l'on repère un ensemble d'information à intégrer dans un agenda électronique, on utilise les fonctionnalités "copier-coller" des systèmes d'exploitation afin de faire le transfert. Pour cela il faut au moins une quinzaine de manipulations, de clics afin de réaliser les opérations suivantes :
- aller sur un site Web, sélectionner un événement (sujet, jour, mois, horaires de début et de fin, adresse), et
- " copier-coller " la séquence de caractères dans l'agenda client à un endroit précis.

Ce mode d'opération est fastidieux et non utilisable dans certains terminaux tels que des téléphones mobiles.

La présente invention vise à remédier à ces inconvénients en proposant un nouveau système automatique et intelligent.

On atteint l'objectif précité avec un système pour sauvegarder des données dans un agenda électronique via Internet, comprenant :
- un serveur Web contenant au moins une page Web sur laquelle se trouve au moins une balise,
- une base de données contenant des informations structurées et associées à ladite balise,
- un terminal utilisateur comprenant l'agenda électronique et un navigateur Web pour visualiser les pages Web dudit serveur Web.

Selon l'invention, le serveur Web comprend en outre des moyens de sauvegarde pour sauvegarder directement et de façon automatique depuis la base de données lesdites informations structurées dans l'agenda électronique en réponse à une activation de la balise, et en ce que, pour permettre la sauvegarde, le terminal utilisateur comprend des moyens d'interfaçage pour activer l'agenda électronique et formater si nécessaire ces informations structurées dans un format compatible avec cet agenda électronique.

La présente invention ne se limite pas à une automatisation du "copier-coller" puisqu'elle fait au moins intervenir en amont une balise pré-éditée associée à des informations structurées.

Avec la présente invention, on peut établir des passerelles entre tout site Web et tout type d'Agenda électronique disponible sur PC ("personal computer"), PDA ("Personal Digital Assistant") et Téléphone mobile. Ainsi l'internaute peut s'approprier toute information qu'il juge critique en la transférant en un clic dans un espace privé, c'est à dire dans un agenda électronique.

De manière plus précise, une balise peut être une icône affichée sur une page Web et associée à des informations structurées qui sont directement transférables sans double saisie Sur la page Web, la balise peut être apposée à côté de l'illustration d'un événement dont les données critiques (dates, lieu, horaire...) sont lesdites informations structurées.

Avantageusement, le système est tel que ces informations sont automatiquement dirigées dans un agenda électronique quelle que soit la plate-forme utilisée : PC (Microsoft Outlook®, Lotus Notes®, ...), sur PDA (Palm®, PocketPC®, ...) ou sur son téléphone mobile (Symbian®, Microsoft®, ...). Ces informations s'inscrivent automatiquement dans le calendrier, le gestionnaire de tâches et/ou le carnet d'adresses.

L'internaute peut alors ultérieurement accéder à ces informations en mode non connecté directement depuis son agenda, et effectuer des achats différés en un seul clic sans avoir à réitérer l'ensemble du processus d'achat on-line.

Avantageusement, ces informations peuvent comprendre des données relatives à :
- tout événement (spectacle, salon professionnel, séminaires de formation),
- tout contact (adresse, numéro de téléphone) transférable directement au sein de leur carnet d'adresses électronique,
- tout " panier d'achat " ou liste de tâches à réaliser.

Selon une caractéristique avantageuse de l'invention, les informations structurées comprennent une référence temporelle. Cette notion de temps peut être importante car elle permet de structurer les informations en indiquant une durée et/ou une datation, cela permet de ranger de manière précise les informations au sein de l'agenda.

La référence temporelle peut être une date qui peut être soit définie au sein desdites informations soit laissée à la discrétion de l'utilisateur qui en rapatriant les informations (associées à la balise) dans son agenda, va préciser ou modifier la date d'inclusion.

Selon un mode de réalisation de l'invention, les moyens de sauvegarde sont une application associée à la balise et comprenant l'adressage desdites informations structurées, cette application étant apte à coopérer avec les fonctions de téléchargement du navigateur.

De préférence, lorsque l'agenda électronique et le navigateur du terminal utilisateur sont compatibles, les moyens d'interfaçage comprennent des fonctionnalités du navigateur permettant l'interface avec ledit agenda électronique. Dans ce cas, la balise est également associée à des instructions utilisant les fonctions du navigateur afin d'aller correctement placer les informations dans l'agenda.

Par contre, lorsque l'agenda électronique n'est pas apte à communiquer avec le navigateur, on peut prévoir que les moyens d'interfaçage comprennent une application dédiée permettant l'interface avec ledit agenda électronique. Ce sera donc une application logicielle (une appliquette ou "applet" en langue anglaise) activable par la balise.

D'une façon générale, pour l'activation de la balise, le serveur Web peut comprendre des moyens pour afficher dans une fenêtre du navigateur lesdites informations structurées et pour requérir l'accord de l'utilisateur. Ainsi l'utilisateur pré-visualise les informations structurées avant leur téléchargement.

Suivant un autre aspect de l'invention, il est proposé un procédé pour sauvegarder des données dans un agenda électronique via Internet. Ce procédé comprend une étape de visualisation, à partir du navigateur d'un terminal utilisateur, d'une page Web contenant une balise associée à des informations structurées contenues dans une base de données. Selon l'invention, le procédé comprend en outre les étapes suivantes :
- sauvegarde directement et de façon automatique depuis la base de données desdites informations structurées dans un agenda électronique dudit terminal utilisateur en réponse à une activation de la balise,
- pour permettre la sauvegarde, activation de l'agenda électronique et formatage si nécessaire de ces informations structurées dans un format compatible avec cet agenda électronique.

D'autres avantages et caractéristiques de l'invention apparaîtront à l'examen de la description détaillée d'un mode de mise en oeuvre nullement limitatif, et des dessins annexés, sur lesquels :
- La figure 1 est une vue générale du système selon l'invention, et
- La figure 2 est un organigramme illustrant différentes étapes lors de la sauvegarde de données dans un agenda électronique.

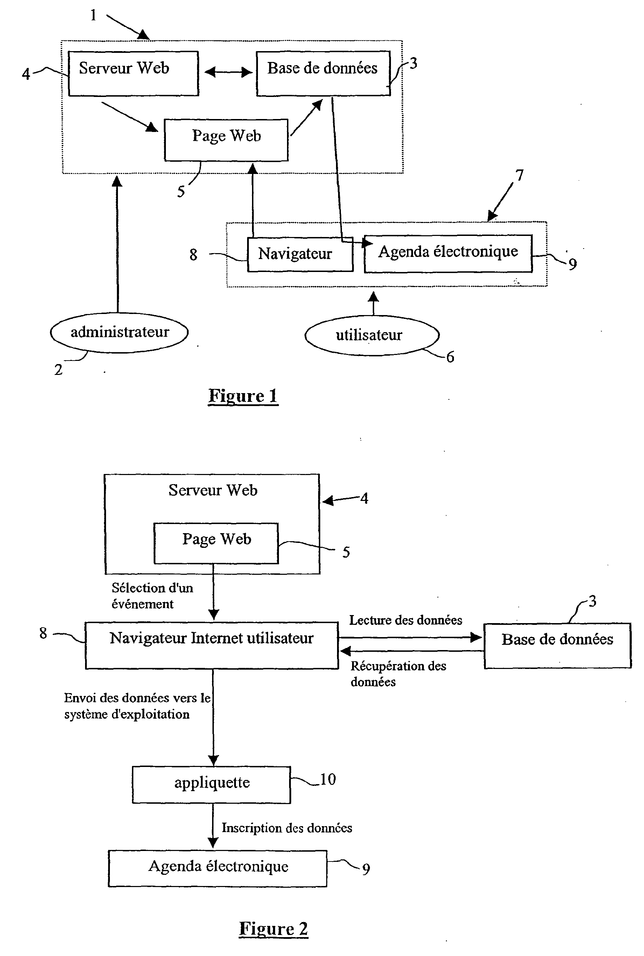

Sur la figure 1, on voit en un site central 1 géré par un administrateur 2, une base de données 3 et un serveur Web 4 éditant une page Web 5.

Le serveur Web 4 utilise la technologie JAVA pour le traitement des instructions. Les informations devant être transmises à l'utilisateur sont stockées dans la base de données relationnelles 3. L'administrateur 2 a élaboré cette base de données à partir d'une autre base de données ou par saisie. On peut envisager une application logicielle permettant de structurer les données selon par exemple trois formats différents :
- le format "icalender" : les informations sont structurées dans une base de données dans laquelle les onglets sont définis de telle sorte que ces informations peuvent aisément être intégrées dans tout type de calendrier électronique, les informations étant alors caractérisées par une date et un horaire donné,
- le format "vCard", pour carte virtuelle : les informations concernent un contact, elles peuvent comprendre l'adresse e-mail, adresse postale et coordonnées téléphoniques,
- le format "iTodo" : les informations concernent des tâches à effectuer à un moment donné telle que par exemple l'achat d'un objet, ces informations comprenant alors le prix de l'objet, le lieu et le moment d'achat dudit objet.

Ces formats "normalisés" de la communauté Internet, qui ont été créés afin de faciliter la synchronisation entre deux agendas électroniques (également carnet d'adresse), sont utilisés ici de façon à faciliter l'entrée de données non pas d'un agenda à un autre mais d'Internet vers un agenda.

L'application permettant de structurer les données est une application basée-serveur s'appuyant sur une architecture J2EE (Java 2 Enterprise Edition) et développée selon un modèle de type MVC (Model-View-Controller) dans laquelle on définit trois types de modèles tels que :
- le modèle contenant les données de l'application,
- la vue contenant la représentation du modèle à l'écran, et
- le contrôle, qui définit la façon dont l'interface utilisateur réagit à une entrée faite par l'utilisateur.

Bien entendu, la présente liste de formats est citée à titre indicatif et non limitatif.

Le serveur Web comprend également une application logicielle de sauvegarde permettant la visualisation des informations relative à un événement sélectionné par l'utilisateur, et la commande d'insertion de ces informations dans l'agenda de l'utilisateur. Cette application de sauvegarde est également développée sur une architecture J2EE (Java 2 Enterprise Edition) et développée selon un modèle de type MVC.

Chaque information, ou groupe d'informations, est relative à des contacts, des événements ou des objets. A chaque information, on associe une balise qui peut être une icône affichée près d'un événement donné sur une page Web 5. L'événement peut être un concert par exemple, et les informations associées à la balise correspondante peuvent être l'auteur, la date, les horaires et le lieu du concert.

L'utilisateur 6 possède un terminal 7 qui peut être un téléphone mobile ou un micro-ordinateur équipé d'un agenda électronique, ou un agenda électronique portable en soi doté de moyen de navigation via Internet.

En particulier par agenda électronique, on entend toute application prévue pour stocker des informations personnelles, c'est à dire tout système pouvant être qualifié de gestionnaire d'information personnelle ou "PIM" pour "Personal Information Manager" en langue anglaise. On peut citer à titre d'exemple des logiciels tels que MS Outlook®, Lotus Notes® ou encore Novell Groupwise®.

L'agenda électronique 9 s'interface aisément avec le navigateur Internet 8, c'est à dire que les flux standardisés "iCal", vCard" ou iTodo" sont reconnus par le système d'exploitation du terminal utilisateur puis directement insérés. Comme on va le voir sur la figure 2, on peut prévoir une appliquette apte à s'interfacer entre l'agenda électronique 9 et le navigateur 8 lorsque ces deux derniers ne peuvent pas communiquer de façon directe. Ce manque de communication directe est notamment dû au fait que certains agendas électroniques ne prennent pas en charge les fichiers standardisés "iCal", vCard" ou iTodo", et au fait que la plupart des agendas électroniques ne peuvent pas insérer en une seule fois plusieurs contacts, événements ou tâches. L'appliquette selon l'invention est conçue de façon à insérer plusieurs éléments d'un même type en une seule fois.

On va maintenant décrire en référence à la figure 2, un exemple de mise en oeuvre de l'invention. L'utilisateur 6 se connecte à la page Web 5 via son navigateur 8, puis sélectionne un événement. Pour ce faire, il clique sur la balise associée à cet événement ou mieux encore, passe simplement le curseur de la souris sur la balise affichée sur le site. Un message standard lui demande s'il désire insérer cet événement dans son agenda. L'accord de l'utilisateur enclenche l'application de sauvegarde qui génère une fenêtre de type "popup" dans le navigateur 8 de l'utilisateur. Cette nouvelle fenêtre affiche l'ensemble des informations concernant l'événement sélectionné. Ces informations proviennent directement de la base de données 3. Au vu de la nouvelle fenêtre, l'utilisateur peut accepter l'insertion des informations affichées ou refuser. Lorsqu'il accepte, son navigateur télécharge directement depuis la base de données 3 les informations affichées vers l'agenda électronique 9 si ce dernier est compatible. Sinon, le navigateur fait appel à une appliquette 10 pour détecter le type d'information à insérer, activer l'agenda électronique et y insérer l'information. Plus précisément, ladite appliquette 10 a pour but de faire le lien entre les flux de données standardisés "iCal", "vCard" et "iTodo" et les logiciels de PIM. Pour chaque type de flux, l'appliquette va en extraire les données et inscrire celles-ci directement dans le logiciel de PIM, en utilisant les librairies applicatives (DLL) mise à disposition par ces logiciels. A son installation, l'appliquette 10 va détecter tous les logiciels de PIM installés sur le poste utilisateur et en proposer leurs prises en compte à l'utilisateur (par exemple, un utilisateur peut avoir Microsoft Outlook® et Lotus Notes® sur son poste, mais ne vouloir insérer les éléments uniquement dans Lotus Notes®). Ensuite, l'appliquette 10 va s'inscrire dans la configuration du système d'exploitation du terminal utilisateur pour être appelé lorsque qu'un flux de données de type "iCal", "vCard" ou "iTodo" sera ouvert. Lorsque cela sera le cas, par exemple lors de la sélection d'un contact, événement ou tâche publié par ledit serveur Web, l'appliquette 10 va automatiquement récupérer les informations associées pour les inscrire dans les logiciels de PIM sélectionnés par l'utilisateur lors de l'installation de l'appliquette 10.

Bien sûr, l'invention n'est pas limitée aux exemples qui viennent d'être décrits et de nombreux aménagements peuvent être apportés à ces exemples sans sortir du cadre de l'invention.

## Revendications

1. Système pour sauvegarder des données dans un agenda électronique (9) via Internet, comprenant :
- un serveur Web (4) contenant au moins une page Web (5),
- une base de données (3) contenant des informations structurées,
- un terminal (7) utilisateur comprenant l'agenda électronique et un navigateur Web (8) pour visualiser les pages Web dudit serveur Web;
le serveur Web comprenant en outre des moyens de sauvegarde pour sauvegarder directement et de façon automatique depuis la base de données lesdites informations structurées dans l'agenda électronique, et pour permettre la sauvegarde, le terminal utilisateur comprend des moyens d'interfaçage pour activer l'agenda électronique et formater si nécessaire ces informations structurées dans un format compatible avec cet agenda électronique; **caractérisé en ce que** ladite page Web comporte une balise pré-éditée et associée à des informations structurées de la base de données, les moyens de sauvegarde agissant en réponse à une activation de ladite balise.

2. Système selon la revendication 1, **caractérisé en ce que** les informations structurées comprennent une référence temporelle.

3. Système selon la revendication 1 ou 2, **caractérisé en ce que** les moyens de sauvegarde sont une application associée à la balise et comprenant l'adressage desdites informations structurées, cette application étant apte à coopérer avec les fonctions de téléchargement du navigateur.

4. Système selon l'une quelconque des revendications précédentes, **caractérisé en ce que** les moyens d'interfaçage comprennent des fonctionnalités du navigateur permettant l'interface avec ledit agenda électronique.

5. Système selon l'une quelconque des revendications 1 à 3, **caractérisé en ce que** les moyens d'interfaçage comprennent une application dédiée (10) permettant l'interface avec ledit agenda électronique.

6. Système selon la revendication 1, **caractérisé en ce que** pour l'activation de la balise, le serveur Web comprend des moyens pour afficher dans une fenêtre du navigateur lesdites informations structurées et pour requérir l'accord de l'utilisateur.

7. Procédé pour sauvegarder des données dans un agenda électronique via Internet, comprenant les étapes de :
- visualisation, d'une page Web à partir du navigateur d'un terminal utilisateur,
- sauvegarde directe et automatique depuis la base de données desdites informations structurées dans un agenda électronique dudit terminal utilisateur,
- pour permettre la sauvegarde, activation de l'agenda électronique et formatage si nécessaire de ces informations structurées dans un format compatible avec cet agenda électronique;
**caractérisé en ce que** l'étape de sauvegarde directe et automatique est réalisée en réponse à une activation d'une balise pré-éditée, contenue dans ladite page Web et associée à des informations structurées de la base de données.

8. Procédé selon la revendication 7, **caractérisé en ce que** les informations structurées comprennent une référence temporelle.
